# DEMANDE DE BREVET EUROPEEN

(11) **EP 3 373 429 A1**
(43) Date de publication de la demande: **12.09.2018**
(21) Numéro de dépôt: 18160043.8
(22) Date de dépôt: 05.03.2018
(51) Int. Cl.: H02M 1/08, H01L 29/78, H02M 7/48, H02J 7/02, H02M 5/22

(54) **CONVERTISSEUR À DOUBLE PONT ET PROCÉDÉ DE COMMANDE D'UN TEL CONVERTISSEUR**

(30) Priorité: 09.03.2017 FR 1751926
(71) Demandeur: COMMISSARIAT À L'ÉNERGIE ATOMIQUE ET AUX ÉNERGIES ALTERNATIVES, 75015 Paris (FR); RENAULT s.a.s., 92100 Boulogne-Billancourt (FR)
(72) Inventeur: DUPUY, Eric, 38300 Maubec (FR); LOUDOT, Serge, 91190 Villiers le Bacle (FR)
(74) Mandataire: GIE Innovation Competence Group

(57) **Abrégé**

L'invention concerne un convertisseur à double pont qui comporte :
- Un transformateur (3) ;
- Un premier pont de commutation (20) de type AC/AC connecté à l'enroulement primaire du transformateur qui comporte au moins deux bras de commutation ;
- Un deuxième pont de commutation (21) de type AC/DC connecté à l'enroulement secondaire du transformateur (3) ;
- Un circuit résonant connecté au premier pont de commutation et à l'enroulement primaire du transformateur et qui comporte un condensateur de résonance (Cr) en série avec une inductance (Lr) ;
- Chaque bras de commutation du premier pont de commutation comporte au moins un premier transistor (TH1, TH2) bidirectionnel à deux électrodes de grille et un deuxième transistor (TL1, TL2) bidirectionnel à deux électrodes de grille connectés en série.

## Description

### Domaine technique de l'invention

La présente invention se rapporte un convertisseur à double pont doté de transistors de puissance à double-grille et à un procédé de commande dudit convertisseur.

### Etat de la technique

Le transistor de puissance en Nitrure de Gallium (GaN) est connu comme étant un composant qui présente certains avantages, notamment une faible résistance à l'état passant permettant d'occasionner peu de pertes et une capacité à fonctionner à des fréquences élevées.

Ce transistor présente une structure obtenue par la croissance par épitaxie de couches de GaN sur un substrat de silicium. Plus spécifiquement, les transistors à effet de champ à haute mobilité d'électrons HEMTs (ou *High Electron Mobility Transistor* dans la littérature anglo-saxonne), basés sur l'hétérojonction AlGaN/GaN, ont démontré d'excellentes performances.

Récemment, il a été proposé de réaliser sur une seule puce un tel transistor bidirectionnel à deux grilles séparées. La demande de brevet WO2009/153965A1 décrit un tel composant et son emploi dans un variateur de vitesse pour la commande d'un moteur électrique.

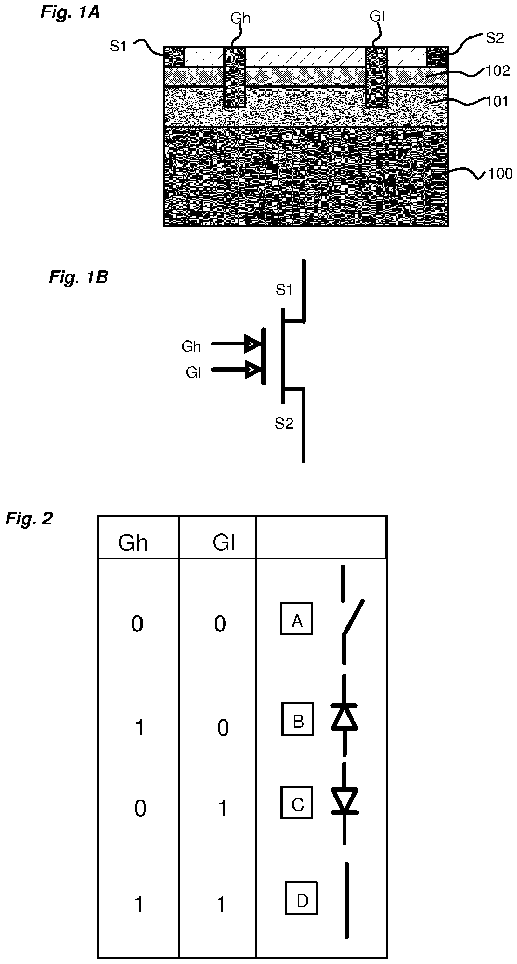

La figure 1 est un schéma représentant une coupe verticale d'un transistor HEMT AlGaN/GaN latéral à double grille et à drain commun. Ce composant est réalisé à partir d'un substrat 100 de silicium en guise de support, d'une couche canal 101 de GaN, et d'une couche barrière 102 de Nitrure de Gallium d'Aluminium AlGaN formant une hétérojonction avec la couche de GaN. Ces deux couches semi-conductrices ont des bandes interdites différentes qui forment un puits quantique à leur interface. Des électrons sont confinés dans ce puits quantique pour former un gaz bidimensionnel d'électrons (2DEG) qui constitue le canal situé à l'interface AlGaN/GaN du côté GaN. L'épitaxie ainsi obtenue accueille deux électrodes ohmiques S1 et S2 espacées latéralement. Deux électrodes de commande, communément appelées grilles, respectivement Gh et Gl, sont disposées entre les deux électrodes ohmiques S1 et S2. Suivant l'architecture à drain commun retenue, le courant et la tension sont donc gérés par un seul et même canal, ce qui optimise la résistance spécifique et le coût du composant.

Même si l'emploi de tels transistors dans des convertisseurs de puissance tels que des variateurs de vitesse a déjà été évoqué dans l'état de la technique, aucune stratégie de commande d'un bras de commutation muni de plusieurs de ces transistors bidirectionnels à double grille n'a été décrite.

Or, il s'avère qu'il existe un besoin de proposer une stratégie de commande adaptée à ce type de composant dans son emploi dans un bras de commutation, notamment pour :
- Eviter toute mise en court-circuit de la source de tension, même lors d'un court instant ;
- Permettre de toujours proposer un chemin pour que le courant dans la charge (souvent inductive) puisse se reboucler, même pour un court instant ;
- Gérer l'inversion de polarité de la source de tension ;

Le document US2014/177308A1 décrit un convertisseur présentant un pont de commutation en entrée utilisant des transistors à double grille et un pont de commutation en sortie de type unidirectionnel à base de diodes. Il s'avère que ce convertisseur fonctionne en appliquant des commutations dures aux transistors, c'est-à-dire que les transistors commutent lorsque le courant au niveau du transformateur est à son maximum, ce qui engendre de fortes pertes par commutation. De plus, la présence de commutateurs de type GaN et leur commande dans ce convertisseur engendrent des perturbations électromagnétiques fortes ce qui impose un fonctionnement nécessairement à haute fréquence.

Le but de l'invention est donc de proposer un procédé de commande de transistors bidirectionnels à double grille associés en série dans un bras de commutation, qui permette de répondre aux objectifs fixés ci-dessus et qui puisse notamment limiter les pertes par commutation en fonctionnement.

### Exposé de l'invention

Ce but est atteint par un convertisseur à double pont qui comporte :
- Un transformateur comprenant un enroulement primaire et un enroulement secondaire ;
- Un premier pont de commutation de type AC/AC connecté à l'enroulement primaire du transformateur et qui comporte au moins deux bras de commutation connectés à une source de tension alternative d'entrée, chaque bras de commutation comportant au moins deux transistors ;
- Un deuxième pont de commutation de type AC/DC connecté à l'enroulement secondaire du transformateur et qui comporte au moins deux bras de commutation ;
- Un circuit résonant connecté au premier pont de commutation et à l'enroulement primaire du transformateur et qui comporte un condensateur de résonance en série avec une inductance ;
- Un système de commande des transistors du premier pont de commutation et du deuxième pont de commutation ;
- Chaque bras de commutation du premier pont de commutation comportant au moins un premier transistor bidirectionnel à deux électrodes de grille et un deuxième transistor bidirectionnel à deux électrodes de grille connectés en série, chaque électrode de grille de chaque transistor pouvant être dans un premier état ou dans un deuxième état, chaque transistor étant commandé de sorte que lorsque :
   ∘ Sa première électrode de grille est dans le premier état et sa deuxième électrode de grille dans le premier état, le transistor est à l'état ouvert,
   ∘ La première électrode de grille et la deuxième électrode de grille sont dans des états différents, le transistor est dans un mode de fonctionnement diode, le mode de fonctionnement diode étant diode inverse ou diode direct selon l'état de chaque électrode de grille,
   ∘ Sa première électrode de grille est dans le deuxième état et sa deuxième électrode de grille est dans le deuxième état, le transistor est à l'état fermé.

Le circuit résonant, composé de l'inductance et du condensateur connectés en série, est avantageusement accordé à une fréquence inférieure à celle à laquelle commutent les transistors, ce qui permet d'assurer un fonctionnement en ZVS ("Zero Voltage Switching"), c'est-à-dire un fonctionnement dans lequel les commutations sont réalisées à zéro de tension (commutations douces).

Selon une particularité, le système de commande comporte :
- Des moyens de traitement agencés pour exécuter des instructions pour appliquer au moins une séquence de commande déterminée au premier pont de commutation ;
- Des moyens d'acquisition de données utilisées comme entrées pour appliquer ladite séquence de commande ;
- Des moyens de commande recevant des commandes de la part des moyens de traitement et agencés pour appliquer des signaux de commande sur les grilles des transistors desdits au moins deux bras de commutation selon la séquence de commande qui est appliquée ;
   Ledit système de commande est apte à commander une séquence de commande de type pleine onde audit premier pont de commutation dans laquelle le premier transistor du premier bras de commutation et le deuxième transistor du deuxième bras de commutation sont à l'état fermé en même temps et le deuxième transistor du premier bras de commutation et le premier transistor du premier bras de commutation sont à l'état fermé en même temps.

Selon une particularité, ladite séquence de commande de type pleine onde est mise en oeuvre sur chaque bras de commutation du premier pont de commutation de la manière suivante :
- Lorsque le premier transistor est commuté de l'état fermé vers un mode de fonctionnement diode, le mode de fonctionnement diode est choisi pour assurer une mise en conduction naturelle du deuxième transistor selon un mode de fonctionnement diode de type roue libre ;
- Lorsque le premier transistor est commuté dans le mode de fonctionnement diode, le deuxième transistor est dans un mode de fonctionnement diode choisi pour reboucler un courant de charge et assurer la continuité dudit courant de charge ;
- Lorsque le deuxième transistor est commuté du mode de fonctionnement diode vers l'état fermé, le premier transistor est maintenu dans son mode de fonctionnement diode.

Selon une réalisation particulière, lorsque la tension d'entrée est dans une alternance de tension positive, le premier transistor étant initialement à l'état fermé et le deuxième transistor initialement dans le mode de fonctionnement diode, ledit système est apte à mettre en oeuvre la séquence suivante :
- Commander le premier transistor dans le mode de fonctionnement diode,
- Après un temps-mort, commander le deuxième transistor à l'état fermé,
- Commander le deuxième transistor dans le mode de fonctionnement diode,
- Après un temps-mort, commander le premier transistor à l'état fermé,

Selon une réalisation particulière, lorsque la tension d'entrée est dans une alternance de tension négative, le premier transistor étant initialement à l'état fermé et le deuxième transistor initialement dans le mode de fonctionnement diode, ledit système est apte à mettre en oeuvre la séquence suivante :
- Commander le premier transistor dans le mode de fonctionnement diode,
- Après un temps-mort, commander le deuxième transistor à l'état fermé,
- Commander le deuxième transistor dans le mode de fonctionnement diode,
- Après un temps-mort, commander le premier transistor à l'état fermé.

Selon une particularité, ladite séquence de commande comporte une étape de commutation des deux électrodes de grilles de tous les transistors dans le premier état lorsque la tension d'entrée est proche de zéro, entre une alternance de tension positive et une alternance de tension négative et entre une alternance de tension négative et une alternance de tension positive.

Selon une autre particularité, le convertisseur comporte des moyens de mesure de la tension fournie par ladite source d'alimentation.

L'invention concerne également le chargeur de batteries d'un véhicule électrique qui comporte un convertisseur à double pont tel que défini ci-dessus.

La présence de deux grilles permet au composant de couper une tension quel que soit son signe et de conduire du courant dans les deux sens. On verra que cette caractéristique permet de réaliser des fonctions de conversion directe d'une tension alternative vers une autre tension alternative (par exemple dans le cadre d'un variateur de vitesse à partir du réseau triphasé ou d'un chargeur isolé qui alimente le transformateur d'isolement directement à partir du réseau d'alimentation) avec une densité de puissance et un rendement nettement plus élevés qu'avec les topologies conventionnelles.

L'invention concerne également un procédé de commande de chaque bras de commutation d'un convertisseur tel que défini ci-dessus, ledit bras de commutation comportant au moins un premier transistor bidirectionnel à deux électrodes de grille et un deuxième transistor bidirectionnel à deux électrodes de grille connectés en série à une source d'alimentation fournissant une tension d'entrée alternative comprenant au moins une alternance de tension positive suivie d'une alternance de tension négative et commandés pour fournir une tension de sortie à une charge électrique destinée à être traversée par un courant de charge et connectée en parallèle du deuxième transistor, ledit premier transistor comprenant une première électrode de grille, une deuxième électrode de grille, et le deuxième transistor comprenant une première électrode de grille, une deuxième électrode de grille, chaque électrode de grille de chaque transistor pouvant être dans un premier état ou dans un deuxième état, chaque transistor étant commandé de sorte que lorsque :
- Sa première électrode de grille est dans le premier état et sa deuxième électrode de grille dans le premier état, le transistor est à l'état ouvert,
- La première électrode de grille et la deuxième électrode de grille sont dans des états différents, le transistor est dans un mode de fonctionnement diode, le mode de fonctionnement diode étant diode inverse ou diode direct selon l'état de chaque électrode de grille,
- Sa première électrode de grille est dans le deuxième état et sa deuxième électrode de grille est dans le deuxième état, le transistor est à l'état fermé,
- Ledit procédé étant caractérisé en ce que, pendant chaque alternance de tension positive ou négative, il suit la séquence suivante :
   ∘ Lorsque le premier transistor est commuté de l'état fermé vers un mode de fonctionnement diode, le mode de fonctionnement diode est choisi pour assurer une mise en conduction naturelle du deuxième transistor selon un mode de fonctionnement diode de type roue libre ;
   ∘ Lorsque le premier transistor est commuté dans le mode de fonctionnement diode, le deuxième transistor est dans un mode de fonctionnement diode choisi pour reboucler le courant de charge et assurer la continuité du courant de charge en roue libre ;
   ∘ Lorsque le deuxième transistor est commuté du mode de fonctionnement diode vers l'état fermé, le premier transistor est maintenu dans son mode de fonctionnement diode.

Selon une particularité, lorsque l'alternance de tension est positive, le premier transistor étant initialement à l'état fermé et le deuxième transistor initialement dans le mode de fonctionnement diode, il consiste à suivre la séquence suivante :
∘ Commander le premier transistor dans le mode de fonctionnement diode,
∘ Après un temps-mort, commander le deuxième transistor à l'état fermé,
∘ Commander le deuxième transistor dans le mode de fonctionnement diode,
∘ Après un temps-mort, commander le premier transistor à l'état fermé.

Selon une autre particularité, lorsque l'alternance de tension est négative, le premier transistor étant initialement à l'état fermé et le deuxième transistor initialement dans le mode de fonctionnement diode, il consiste à suivre la séquence suivante :
∘ Commander le premier transistor dans le mode de fonctionnement diode,
∘ Après un temps-mort, commander le deuxième transistor à l'état fermé,
∘ Commander le deuxième transistor dans le mode de fonctionnement diode,
∘ Après un temps-mort, commander le premier transistor à l'état fermé.

Selon une autre particularité, le procédé comporte une étape de détection de l'alternance de la tension d'entrée fournie par ladite source d'alimentation.

### Brève description des figures

D'autres caractéristiques et avantages vont apparaître dans la description détaillée qui suit faite en regard des dessins annexés dans lesquels :
- Les figure 1A et 1B représentent un transistor à effet de champ à haute mobilité électronique, à double grille et à drain commun, connu dans l'état de la technique, respectivement vu suivant une coupe schématique et vu sous la forme de son symbole électronique ;
- La figure 2 illustre les différents états pris par un transistor bidirectionnel à double grille tel que représenté sur la figure 1 ;
- La figure 3 représente un schéma électronique d'un bras de commutation à deux transistors bidirectionnels à double grille en série tels que représentés sur la figure 1, connecté à une source d'alimentation et commandé pour alimenter une charge électrique ;
- Les figures 4A et 4B représentent des chronogrammes illustrant les séquences de commande appliquées au bras de commutation de la figure 3;
- Les figures 5A et 5B illustrent les différentes phases des séquences de commande représentées sur les figures 4A et 4B ;
- La figure 6 représente des courbes illustrant les séquences de commande des figures 4A et 4B ;
- La figure 7 représente la topologie d'un convertisseur à double pont "Dual Active Bridge" de type monophasé, à deux bras de commutation tels que celui de la figure 3 ;
- La figure 8 représente la topologie d'un convertisseur à double pont "'Dual Active Bridge" de type triphasé, à trois bras de commutation tels que celui de la figure 3 ;
- La figure 9 représente un chronogramme illustrant la séquence de commande appliquée à un pont de commutation du convertisseur de la figure 7 ;
- La figure 10 illustre les différentes phases de la séquence de commande représentée sur la figure 9 ;
- La figure 11 illustre le principe de l'aide au blocage d'un transistor employé dans un convertisseur de l'invention ;

### Description détaillée d'au moins un mode de réalisation

Comme déjà décrit ci-dessus, un transistor à effet de champ à haute mobilité électronique (HEMT) en Nitrure de Gallium (ci-après GaN) sur substrat silicium à deux grilles séparées et à drain commun est représenté sur les figures 1A et 1B. De manière générale mais non limitative et pour les besoins de l'invention, un tel transistor comporte les particularités suivantes :
- Un substrat en silicium ;
- Une couche de GaN formée par épitaxie sur le substrat en silicium, au travers d'une couche tampon spécifique (AIN typiquement) afin d'assurer l'intégrité de la structure cristalline du GaN ;
- Une couche barrière formée par épitaxie sur la couche de GaN, de manière à former un canal de conduction à l'interface de la couche de GaN et la couche barrière ;
- Deux électrodes de source S1, S2 opposées et un drain D commun ;
- Deux électrodes de commande, appelées également électrodes de grille Gh, Gl, réalisées sur la couche barrière et formées entre les deux électrodes de source S1, S2 de manière à moduler la conductance dans le canal de conduction entre les deux électrodes de source S1, S2 ;

La structure à drain commun n'augmente la taille du composant que d'une longueur grille-source par rapport à un transistor simple grille (environ 10% de surface active supplémentaire pour une tension de blocage de 600V, soit 2µm pour une longueur de 17 à 18µm classiquement).

Dans un tel transistor, la première électrode de grille (Gh) et la deuxième électrode de grille (Gl) sont chacune susceptibles de prendre deux états distincts, dits premier état et deuxième état. De manière non limitative, le premier état est un état 0, c'est-à-dire que la grille est inactive et le deuxième état est un état 1, c'est-à-dire que la grille est active.

L'invention est décrite ci-dessous avec des transistors de type normalement ouvert ("normally off"), c'est-à-dire à l'état ouvert en l'absence de tension de commande sur la grille mais il faut comprendre qu'elle pourrait s'appliquer avec des transistors de type normalement fermé ("normally on"), c'est-à-dire à l'état fermé en l'absence de tension de commande sur la grille.

En référence à la figure 2, selon l'état pris par chacune de ses électrodes de grille Gh et Gl, le transistor pourra prendre les quatre états distincts ou modes de fonctionnements décrits ci-dessous :
- Etat A : Première électrode de grille Gh à l'état 0 et deuxième électrode de grille Gl à l'état 0, le transistor est à l'état ouvert ;
- Etat B : Première électrode de grille Gh à l'état 1 et deuxième électrode de grille Gl à l'état 0, le transistor est dans un mode de fonctionnement diode inverse ;
- Etat C : Première électrode de grille Gh à l'état 0 et deuxième électrode de grille Gl à l'état 1, le transistor est dans un mode de fonctionnement diode direct ;
- Etat D : Première électrode de grille Gh à l'état 1 et deuxième électrode de grille Gl à l'état 1, le transistor est à l'état fermé ;

Dans un tel composant à double-grille à base de GaN, le mode de fonctionnement diode est réalisé de manière automatique avec une remise en conduction naturelle du composant en mode inverse lorsqu'il est bloqué.

Ces quatre états A, B, C, D permettent ainsi un fonctionnement dans les quatre quadrants, c'est-à-dire :
- Tension à bloquer positive ou négative entre les électrodes S1 et S2 ;
- Circulation du courant dans les deux sens entre les électrodes S1 et S2 ;
- Choix du sens de roue libre selon le signe de la tension à bloquer entre les électrodes S1 et S2 ;

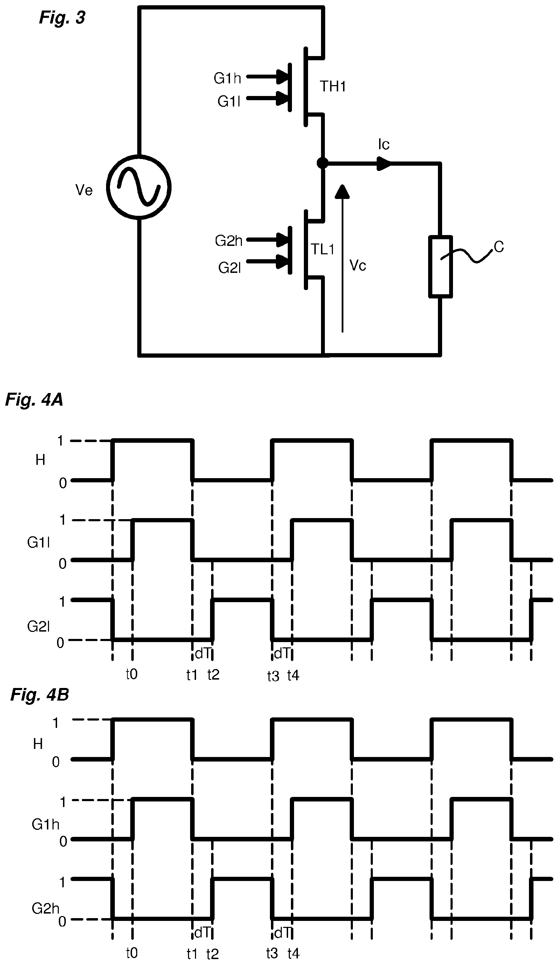

En référence à la figure 3, l'invention s'applique notamment à un bras de commutation qui comporte deux transistors TH1, TL1 bidirectionnels à double grille tels que décrits ci-dessus, connectés en série à une source d'alimentation fournissant une tension d'entrée alternative Ve. Le premier transistor TH1 comporte une première électrode de grille G1 h et une deuxième électrode de grille G1l et le deuxième transistor TL1 comporte une première électrode de grille G2h et une deuxième électrode de grille G2l. Les deux transistors TH1, TL1 sont commandés pour convertir ladite tension d'entrée Ve en une tension de sortie Vc fournie à une charge électrique C, par exemple connectée en parallèle du deuxième transistor TL1. La source d'alimentation fournit une tension Ve alternative, avantageusement sinusoïdale, comportant une succession de motifs, chaque motif comprenant une alternance de tension positive suivie d'une alternance de tension négative. La tension Ve est par exemple la tension fournie par le réseau électrique à une fréquence de 50Hz ou 60Hz.

En tenant compte des différents états décrits ci-dessus que peut prendre chaque transistor à double grille, l'invention vise à proposer un procédé de commande adapté à un tel bras de commutation qui permette de remplir certains objectifs, notamment :
- D'éviter toute mise en court-circuit de la source d'alimentation, même lors d'une courte durée ;
- De toujours proposer un chemin pour que le courant présent dans la charge (qui est souvent inductive) puisse se reboucler, même lors d'une courte durée ;
- De gérer l'inversion de polarité de la source d'alimentation ;

Les figures 4A et 4B représentent deux chronogrammes illustrant le principe du procédé de commande de l'invention. Le premier chronogramme est appliqué lorsque la tension d'entrée fournie par la source d'alimentation est dans une alternance positive (Ve>0) et le deuxième chronogramme est appliqué lorsque la tension d'entrée fournie par la source d'alimentation est dans une alternance négative (Ve<0).

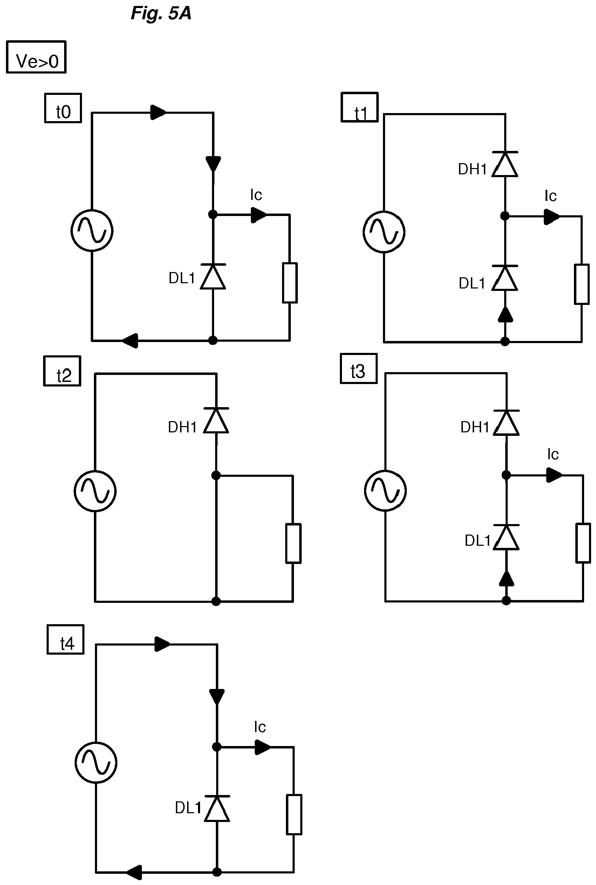

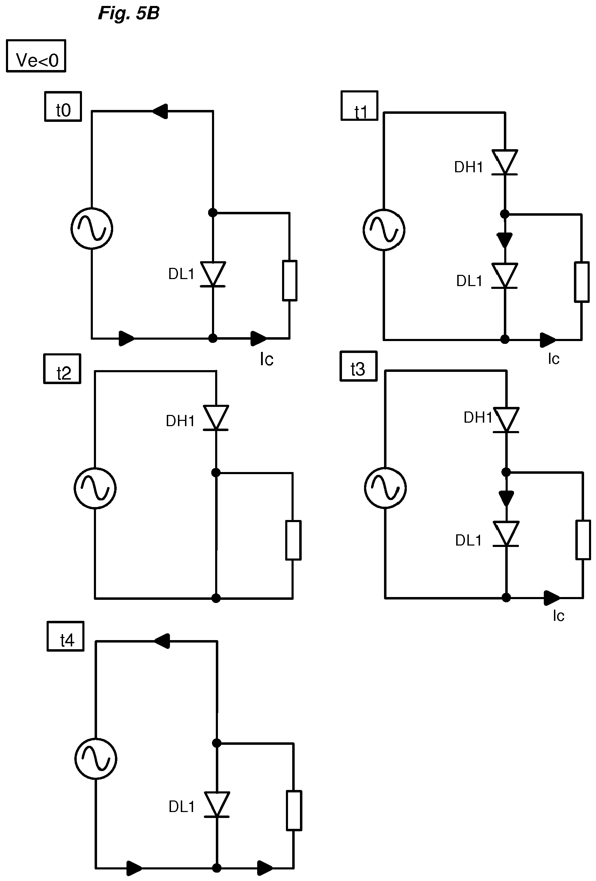

Les figures 5A et 5B représentent les différents états du bras de commutation, respectivement en suivant le chronogramme de la figure 4A et le chronogramme de la figure 4B. Sur les figures 5A et 5B, un transistor à l'état fermé est indiqué par une branche de circuit continue et un transistor dans un mode de fonctionnement diode, inverse ou direct, est représenté sous la forme d'une diode orientée dans le sens correspondant à son mode de fonctionnement et référencé avec le préfixe D (DH1 ou DL1).

Le procédé de commande est appliqué en suivant un signal d'horloge H permettant de séquencer les commandes appliquées sur les grilles des deux transistors du bras de commutation, que ce soit lorsque l'alternance de la tension d'entrée est positive ou négative. Le signal d'horloge H peut prendre deux états distincts 0 ou 1.

Selon un aspect de l'invention, le procédé consiste notamment à faire en sorte que, lors de chaque alternance de la tension d'entrée, chaque transistor du bras de commutation présente l'une de ses deux grilles maintenues active et l'autre de ses deux grilles commutées dans l'un ou l'autre de ses deux états (actif ou inactif).

Le procédé de l'invention est mis en oeuvre par un système qui comporte notamment :
- Des moyens de traitement comprenant un microprocesseur et des moyens de mémorisation et agencés pour exécuter des instructions logicielles pour appliquer au moins une séquence de commande déterminée ; les instructions logicielles sont stockées dans lesdits moyens de mémorisation et font partie dudit système de commande ;
- Des moyens d'acquisition de données, notamment de données de tension (la tension Ve par exemple) et/ou de courant, par exemple par mesure, utilisées comme entrées pour appliquer la séquence de commande ;
- Des moyens de commande recevant des commandes de la part des moyens de traitement et agencés pour appliquer des signaux de commande sur les grilles des transistors du bras de commutation selon la séquence de commande qui est appliquée ; ces moyens de commande comportent notamment des unités de pilotage ("driver") adaptées à la commande des grilles des transistors.

De manière plus précise mais non limitative, en référence à la figure 4A et à la figure 5A, lorsque la tension d'entrée est dans une alternance positive, Ve>0, les moyens de traitement évoqués ci-dessus mettent en oeuvre la séquence suivante :
- Les électrodes de grille G1 h et G2h sont maintenues actives, c'est-à-dire à l'état 1 pendant toute la durée de l'alternance. La commutation est alors appliquée sur les deux autres électrodes de grille, c'est-à-dire G1l et G2l.
- A partir de t0, H=1 - L'électrode de grille G1l est initialement à l'état 1 et l'électrode de grille G2l est à l'état 0. Le premier transistor TH1 est ainsi dans l'état D, c'est-à-dire fermé et le deuxième transistor TL1 est dans l'état B, c'est-à-dire dans un mode de fonctionnement diode inverse. La tension de sortie Vc générée par le bras de commutation vaut donc Vc=Ve et le courant Ic augmente, permettant d'alimenter la charge électrique C.
- A partir de t1, H=0 - L'électrode de grille G1l passe à l'état 0 et l'électrode de grille G2l reste à l'état 0. Le premier transistor TH1 et le deuxième transistor TL1 sont chacun dans l'état B, c'est-à-dire dans le mode fonctionnement diode inverse. La tension de sortie s'annule, Vc=0. Le courant Ic décroît. Lorsque TH1 passe dans le fonctionnement diode inverse, le transistor TL1 se place naturellement en roue libre, permettant de reboucler le courant Ic.
- A partir de t2, H=0 - Après un temps mort dT, l'électrode de grille G2l est commandé à l'état 1. L'électrode de grille G1l est toujours à l'état 0. Le premier transistor TH1 est donc toujours dans l'état B, c'est-à-dire dans le mode de fonctionnement diode inverse et le deuxième transistor TL1 est commuté dans l'état D, c'est-à-dire à l'état fermé. La tension Vc reste nulle, Vc=0 et le courant Ic continue de décroître.
- A partir de t3, H=1 - L'électrode de grille G2l passe à l'état 0. L'électrode de grille G1l reste inactive à l'état 0. Le premier transistor TH1 et le deuxième transistor TL1 sont donc à l'état B, c'est-à-dire en mode de fonctionnement diode inverse. Le transistor TL1 est ainsi remis en fonctionnement diode inverse pour préparer la prochaine commutation du transistor TH1.
- A partir de t4, H=1 - Après un temps mort dT, l'électrode de grille G1l est commandée à l'état 1. L'électrode de grille G2l est maintenue inactive à l'état 0. Le premier transistor TH11 est donc commuté dans l'état D, c'est-à-dire à l'état fermé et le deuxième transistor TL1 est dans l'état B, c'est-à-dire dans le mode de fonctionnement diode inverse.

En référence à la figure 4B et à la figure 5B, lorsque la tension d'entrée est dans une alternance négative, Ve<0, les moyens de traitement appliquent la séquence suivante :
- Les électrodes de grille G1l et G2l sont maintenues actives, c'est-à-dire à l'état 1 pendant toute la durée de l'alternance. La commutation est alors appliquée sur les deux autres électrodes de grille, c'est-à-dire G1 h et G2h.
- A partir de t0, H=1 - L'électrode de grille G1h est initialement à l'état 1 et l'électrode de grille G2h est à l'état 0. Le premier transistor TH1 est ainsi dans l'état D, c'est-à-dire fermé et le deuxième transistor TL1 est dans l'état C, c'est-à-dire dans un mode de fonctionnement diode direct. La tension de sortie Vc générée par le bras de commutation vaut donc Vc=Ve et le courant Ic est négatif. La valeur absolue du courant Ic augmente.
- A partir de t1, H=0 - L'électrode de grille G1 h passe à l'état 0 et l'électrode de grille G2h reste à l'état 0. Le premier transistor TH1 et le deuxième transistor TL1 sont chacun dans l'état C, c'est-à-dire dans le mode fonctionnement diode direct. La tension de sortie s'annule, Vc=0. La valeur absolue du courant Ic diminue. Lorsque TH1 passe dans le fonctionnement diode direct, le transistor TL1 se place naturellement en roue libre, permettant de reboucler le courant Ic.
- A partir de t2, H=0 - Après un temps mort dT, l'électrode de grille G2h est commandé à l'état 1. L'électrode de grille G1h est toujours à l'état 0. Le premier transistor TH1 est donc toujours dans l'état C, c'est-à-dire dans le mode de fonctionnement diode direct et le deuxième transistor TL1 est commuté dans l'état D, c'est-à-dire à l'état fermé. La tension Vc reste nulle, Vc=0. La valeur absolue du courant Ic diminue.
- A partir de t3, H=1 - L'électrode de grille G2h passe à l'état 0. L'électrode de grille G1 h reste inactive à l'état 0. Le premier transistor TH1 et le deuxième transistor TL1 sont donc à l'état C, c'est-à-dire en mode de fonctionnement diode direct. Le transistor TL1 est donc remis en fonctionnement diode direct pour préparer la prochaine commutation du transistor TH1.
- A partir de t4, H=1 - Après un temps mort dT, l'électrode de grille G1 h est commandée à l'état 1. L'électrode de grille G2h est maintenue inactive à l'état 0. Le premier transistor TH1 est donc commuté dans l'état D, c'est-à-dire à l'état fermé et le deuxième transistor TL1 est dans l'état C, c'est-à-dire dans le mode de fonctionnement diode direct. La valeur absolue du courant Ic augmente.

La durée de chaque temps mort dT est adaptée pour assurer que chaque nouvelle commutation d'un transistor vers l'état D se produise alors que l'autre transistor n'est plus dans cet état D, évitant toute mise en court-circuit de la source d'alimentation.

La durée du temps-mort est adaptée de manière à être suffisamment courte pour ne pas trop affecter le rendement mais suffisamment longue pour éviter tout court-circuit de la source de tension.

De manière avantageuse et pour rendre la commande plus robuste, la séquence de commande peut intégrer, lors d'un changement d'alternance de la tension d'entrée (d'une alternance positive vers une alternance négative ou d'une alternance négative vers une alternance positive), une commande à l'état inactif de toutes les grilles des transistors du bras de commutation. Pour l'alternance qui débute (négative ou positive), il s'agit alors de s'assurer que le courant Ic est bien nul avant d'appliquer la séquence de commande prévue pour cette alternance. Cela permet d'éviter de mettre la source d'alimentation fournissant la tension Ve en court-circuit et de tenir compte des erreurs possibles de mesure sur la tension Ve.

Bien entendu, pour les besoins de la commande, le système pourra comporter des moyens de mesure de la tension d'entrée et des moyens de détection seront nécessaires pour connaître si la tension d'entrée est dans une alternance positive ou dans une alternance négative et ainsi appliquer la séquence de commande adaptée.

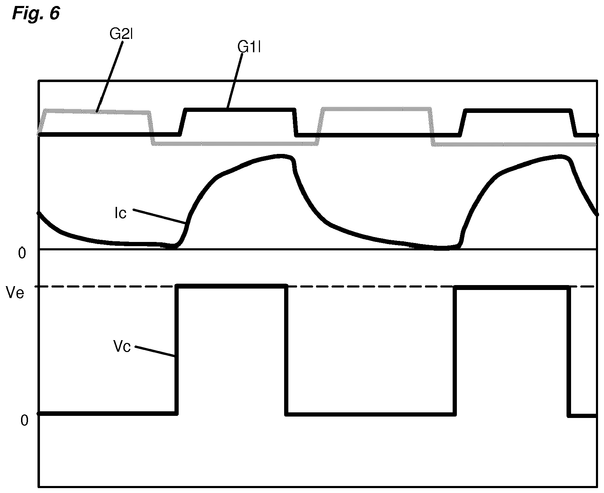

La figure 6 illustre la variation de la tension de sortie Vc et du courant Ic selon l'état pris par les deux électrodes de grille G1l et G2l en découpage, les deux autres électrodes de grille G1h et G2h étant saturée, c'est-à-dire à l'état 1. Il s'agit donc de la stratégie de commande décrite ci-dessus lorsque Ve est supérieur à 0, en liaison avec les figures 4A et 5A.

Le procédé de commande décrit ci-dessus en liaison avec les chronogrammes permet donc de répondre aux différents objectifs précités, c'est-à-dire :
- Aucun risque de court-circuit : la durée de chaque temps mort dT est définie de manière à n'avoir jamais deux commutations simultanées, malgré les dispersions des caractéristiques des composants ;
- Le courant Ic dans la charge dispose toujours d'un chemin pour se reboucler, grâce à l'état B ou C pris par le transistor, avant la commutation suivante ;
- Le procédé tient compte de la polarité de la tension d'entrée Ve, avec deux stratégies symétriques lorsque l'alternance de tension est positive ou négative ; Il suffit en effet d'inverser les commandes entre Gh et Gl d'un même transistor ;
- La durée de fonctionnement en mode diode est interrompu pour saturer le transistor afin de réduire ses pertes en conduction ; seules les commutations se font en mode diode ;
- Le rendement du bras de commutation peut être facilement optimisé en limitant la durée du temps-mort dT au maximum ;
- La stratégie de commande est compatible avec un fonctionnement en commutation au zéro de tension ("Zero voltage Switching" - ZVS) sur charge résonante (voir ci-après) ;

La stratégie ou séquence de commande du bras de commutation décrite ci-dessus est particulièrement avantageuse pour s'appliquer sur des convertisseurs comprenant plusieurs bras de commutation de ce type.

C'est le cas notamment pour des convertisseurs employés dans des applications de type chargeur de batterie (Batt) embarqué pour véhicule à traction électrique ou dans des applications qui nécessitent de fournir une alimentation continue et/ou à haute tension de sortie à partir du réseau électrique domestique monophasé ou triphasé et qui ne requièrent pas nécessairement d'échanges d'énergie électrique dans les deux sens. A titre d'exemple, c'est le cas notamment des autres applications suivantes :
- Alimentation de tubes à vide (rayons X, Micro-ondes) ;
- Alimentation de laser ;
- Transmission d'énergie sans contact pas couplage inductif ;
- Systèmes d'alimentation secourus (UPS), notamment pour serveurs informatiques ;

De manière plus précise, dans une application de type chargeur de batterie embarqué pour véhicule à traction électrique, il s'avère que l'emploi de bras de commutation tels que décrits ci-dessus à base de transistors bidirectionnels à double grille, permet de répondre aux exigences fonctionnelles actuelles suivantes :
- Réduire le volume, en augmentant la densité de puissance, grâce à l'élimination d'un étage de redressement en entrée ;
- Assurer un fonctionnement bidirectionnel, la batterie pouvant se décharger dans le réseau électrique (systèmes type "Smart Grid") ;
- Améliorer le rendement de conversion sur toute la plage de fonctionnement, ceci étant nécessaire pour le renvoi d'énergie vers le réseau ;
- Réduire le coût du chargeur, en minimisant la quantité de composants semi-conducteurs et en augmentant la fréquence de commutation, permettant ainsi de réduire la taille des filtres et du transformateur ;
- Réduire les perturbations électromagnétiques rayonnées et conduites sur le réseau électrique, de manière à être notamment compatible avec les réseaux électriques à neutre isolé.

Dans une application d'un convertisseur de type chargeur tel que décrit ci-dessus, la réalisation d'un convertisseur doté de bras de commutation tels que décrits ci-dessus et commandés chacun selon la stratégie développée ci-dessus permet de mettre en oeuvre une conversion directe AC/AC, c'est-à-dire de convertir directement la tension alternative fournie par une source d'alimentation électrique telle que par exemple le réseau électrique sans passer par un étage de redressement classique.

Sur la base de plusieurs bras de commutation en parallèle, dotés chacun d'au moins deux transistors bidirectionnels à double grille en série, plusieurs topologies de chargeur peuvent être envisagées.

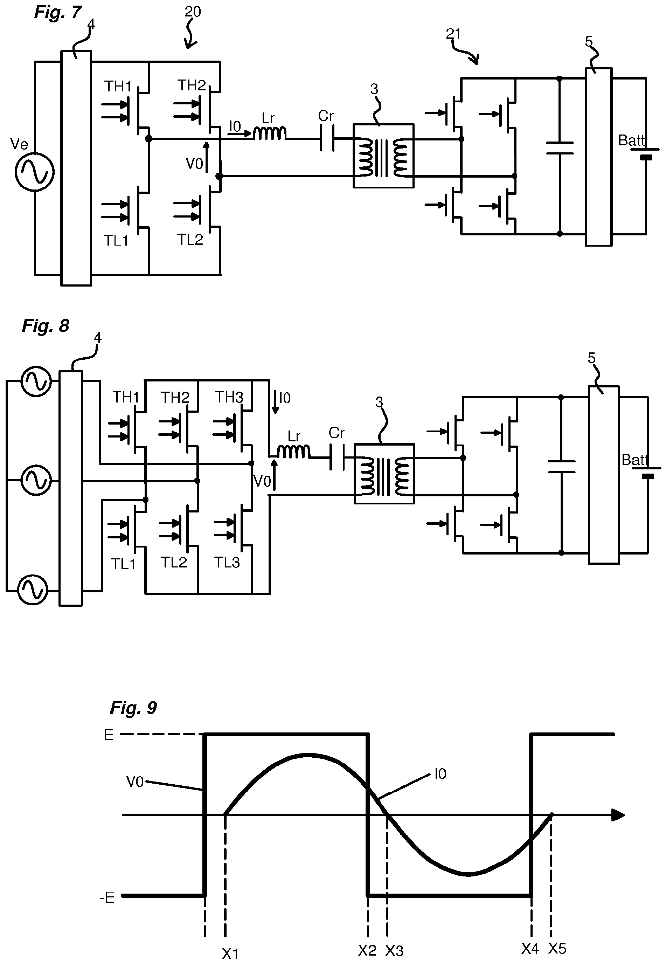

La figure 7 présente une topologie de convertisseur monophasé employé dans un chargeur qui est particulièrement intéressante. La figure 8 présente la variante triphasée de cette topologie.

Le convertisseur présente ainsi une topologie à double pont isolé (appelé également DAB pour "Dual Active Bridge") qui comporte les éléments suivants :
- Un transformateur 3 comprenant deux premières bornes entre lesquelles est connecté un enroulement primaire, et deux deuxièmes bornes entre lesquelles est connecté un enroulement secondaire.
- Un premier pont de commutation 20 AC/AC connecté à l'enroulement primaire du transformateur. Il comporte deux bras de commutation (en version monophasée) du type décrit ci-dessus et représenté sur la figure 3 et destinés à convertir la tension alternative Ve fournie en entrée par la source en une tension alternative ou inversement. Chaque bras de commutation comporte au moins deux transistors et un point milieu de connexion situé entre ses deux transistors. Le premier point milieu de connexion est connecté à une borne de l'enroulement primaire du transformateur et le deuxième point milieu de connexion est connecté à l'autre borne de l'enroulement primaire du transformateur. Entre les deux points de milieu de connexion est générée la tension V0.

- Un deuxième pont de commutation 21 de type AC/DC connecté à l'enroulement secondaire du transformateur 3. Il comporte deux lignes d'alimentation entre lesquelles est appliquée une tension continue et deux bras de commutation connectés entre les deux lignes d'alimentation et destinés à convertir une tension alternative en une tension continue ou inversement. Chaque bras de commutation comporte au moins deux interrupteurs et un point milieu de connexion situé entre ses deux interrupteurs. Le premier point milieu de connexion est connecté à une borne de l'enroulement secondaire du transformateur et le deuxième point milieu de connexion est connecté l'autre borne de l'enroulement secondaire S du transformateur.
- De manière optionnelle, un circuit résonant sur le lien dit AC du côté primaire, c'est-à-dire connecté entre la sortie du premier pont de commutation 20 et l'enroulement primaire du transformateur 3 et qui comporte un condensateur de résonance Cr en série avec une inductance Lr.
- Avantageusement, un étage 4 de filtrage d'entrée en mode commun et différentiel positionné entre la source de tension alternative et le premier pont de commutation, comprenant classiquement des inductances et des condensateurs de filtrage.
- Avantageusement, un étage 5 de filtrage de sortie connecté entre le deuxième pont de commutation et la batterie Batt ou l'ensemble de batteries.

Pour la commande des bras de commutation, le convertisseur comporte avantageusement un système de commande adapté qui inclut :
- Des moyens de traitement comprenant un microprocesseur et des moyens de mémorisation et agencés pour exécuter des instructions logicielles pour appliquer au moins une séquence de commande déterminée ; les instructions logicielles sont stockées dans lesdits moyens de mémorisation et font partie dudit système de commande ;
- Des moyens d'acquisition de données, notamment de données de tension (la tension Ve par exemple) et/ou de courant, par exemple par mesure, utilisées comme entrées pour appliquer la séquence de commande ;
- Des moyens de commande recevant des commandes de la part des moyens de traitement et agencés pour appliquer des signaux de commande sur les grilles des transistors de chaque bras de commutation du convertisseur selon la séquence de commande qui est appliquée ; ces moyens de commande comportent notamment des unités de pilotage ("driver") adaptées à la commande des grilles des transistors.

Pour réaliser la conversion directe AC/AC, le premier pont de commutation 20 comporte des transistors bidirectionnels à double grille, faisant l'objet de l'invention et référencés TH1, TL1 pour le premier bras de commutation et TH2, TL2 pour le deuxième bras de commutation. Dans le deuxième pont de commutation 21, les transistors peuvent être de tous types, par exemple des transistors unidirectionnels en tension et bidirectionnels en courant de type IGBT ou du type à effet de champ (FET). Dans ce dernier cas, il s'agira par exemple plus particulièrement de transistors de type MOSFET ou JFET. Il pourra par exemple s'agir de transistors MOSFET en carbure de silicium.

Selon la commande appliquée, le transfert de puissance pourra être réalisé de la source vers la charge ou de la charge vers la source.

En référence à la figure 8, dans sa variante triphasée, le premier pont de commutation comporte un bras de commutation supplémentaire, identique aux deux premiers et comportant les transistors TH3 et TL3. Dans cette variante, les trois phases d'entrée reliées à la source d'alimentation électrique sont connectées de manière distincte aux trois points milieux des trois bras de commutation et les trois bras de commutation sont connectés en parallèle de l'enroulement primaire P du transformateur 3.

Selon une autre variante de réalisation non représentée, le circuit résonant pourra être réparti sur le primaire et sur le secondaire du transformateur. Cette configuration ne change pas le pilotage qui sera décrit ci-dessous.

La stratégie de commande décrite ci-dessus pour le bras de commutation représenté sur la figure 3 s'applique ainsi de manière similaire aux bras de commutation d'un convertisseur tel que représenté sur les figures 7 ou 8.

Lorsque le convertisseur est de type monophasé comme représenté sur la figure 7, il s'agit simplement de réaliser une commande dite pleine onde, c'est-à-dire sur une diagonale entre les deux bras de commutation, de sorte que la commutation à l'état fermé du transistor TH1 du premier bras de commutation s'accompagne de la commutation à l'état fermé du transistor TL2 du deuxième bras de commutation et d'appliquer ensuite une commande de manière symétrique pour les transistors TH2 et TL1.

Le circuit résonant, composé de l'inductance Lr et du condensateur Cr connectés en série, est avantageusement accordé à une fréquence inférieure à celle à laquelle commutent les transistors, ce qui permet d'assurer un fonctionnement en ZVS ("Zero Voltage Switching"), c'est-à-dire un fonctionnement dans lequel les commutations sont réalisées à zéro de tension. On a ainsi un amorçage de chaque transistor à tension nulle lorsqu'il conduit en inverse (mode diode de roue libre), qui permet d'avoir une énergie à l'amorçage nulle (pas de perte par commutation lors du passage à l'état D qui a été défini ci-dessus).

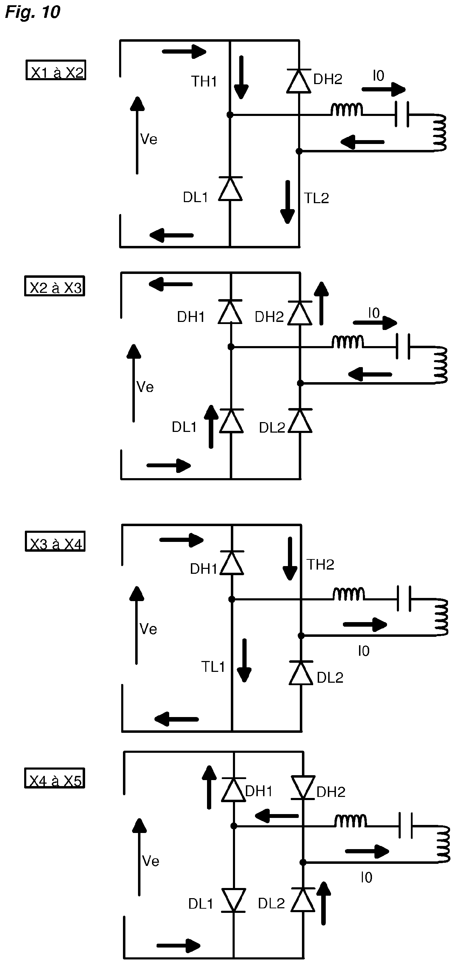

Les figures 9 et 10 illustrent les différentes étapes de fonctionnement du convertisseur de la figure 7 en fonctionnement dit ZVS. Sur la figure 10, un transistor à l'état fermé (état D) est indiqué par une branche de circuit continue et un transistor dans un mode de fonctionnement diode, inverse ou direct, est représenté sous la forme d'une diode orientée dans le sens correspondant à son mode de fonctionnement et référencé avec la lettre D (DH1, DL1, DH2, DL2)

La tension Ve fournie par la source oscille entre E et -E. Lorsque la tension Ve est dans une alternance positive, la séquence est ainsi la suivante :
- Entre X1 et X2, les transistors TH1 et TL2 sont à l'état D. La tension V0 (obtenue en sortie du premier pont de commutation 20) vaut E et le courant I0 qui traverse le primaire du transformateur est positif donc circule dans les transistors TH1 et TL2. Les deux autres transistors TL1 et TH2 sont à l'état B, c'est-à-dire en mode diode inverse.
- A X2, atteint au bout d'une demi-période, les transistors TH1 et TL2 sont commandés vers l'état B, c'est-à-dire en mode diode inverse.
- Entre X2 et X3, le courant I0 étant toujours positif, il circule par les diodes de roue libre des transistors TL1 et TH2. La tension V0 s'inverse et vaut alors -E. De ce fait, la tension vue par les transistors TH2 et TL1 est nulle. Durant cette phase de roue libre, les transistors TL1 et TH2 sont amorcés.
- Entre X3 et X4, le courant s'inverse alors naturellement (grâce au circuit résonant) et devient négatif. Il passe par les transistors TH2 et TL1, sans pertes par commutation car ces transistors ont déjà été amorcés pendant la phase précédente.
- A X4, au bout d'une demi-période, les transistors TH2 et TL1 sont commandés à l'état C, c'est-à-dire en mode diode direct.
- Entre X4 et X5, le courant I0 étant toujours négatif, il circule par les diodes de roue libre des transistors TH1 et TL2. Durant cette phase de roue libre, les transistors TH1 et TL2 sont de nouveau amorcés, pour revenir dans la phase initiale.

Il faut noter qu'étant donné que le courant dans la source change brutalement de signe (à la vitesse du di/dt dans les composants), un condensateur de filtrage (appelé classiquement "DC-Link") est positionné en entrée du premier pont de commutation, dans l'étage de filtrage 4.

Lorsque la tension d'entrée Ve est dans une alternance négative, les différentes phases décrites ci-dessus sont mises en oeuvre de manière symétrique, comme pour la description faite ci-dessus de la séquence de commande du bras de commutation.

De manière avantageuse, comme déjà décrit ci-dessus pour la séquence de commande appliquée au bras de commutation, la séquence de commande appliquée au convertisseur peut intégrer, lors d'un changement d'alternance de la tension d'entrée Ve (d'une alternance positive vers une alternance négative ou d'une alternance négative vers une alternance positive), une commande à l'état inactif de toutes les grilles des transistors du bras de commutation. Pour l'alternance qui débute (négative ou positive), il s'agit alors de s'assurer que le courant au primaire est bien nul avant d'appliquer la séquence de commande prévue pour cette alternance. Cela permet d'éviter de mettre la source d'alimentation fournissant la tension Ve en court-circuit et de tenir compte des erreurs possibles de mesure sur la tension Ve.

Le convertisseur à base de transistors bidirectionnels à double grille et la séquence de fonctionnement décrite ci-dessus présentent notamment les avantages suivants :
- Forte densité de puissance grâce à la suppression d'un étage de conversion et d'un stockage passif (typiquement la capacité DC en sortie d'un étage PFC) ;
- Coût fortement réduit, de par l'utilisation d'un minimum de composants semi-conducteurs (suppression d'un étage de conversion, et l'adjonction d'une 2ème grille sur un composant GaN n'entraine qu'une faible augmentation de la surface (i.e. du coût) du composant) d'une part, et de l'augmentation de la fréquence de commutation qui permet de réduire le volume (donc le coût) des composants passifs d'autre part.
- La commutation à résonance de type ZVS qui permet d'éviter un surcroit de pertes liées à la résistance dynamique des composants de type GaN, et donc d'assurer des pertes électroniques indépendantes de la fréquence de commutation. La fréquence de commutation résulte d'un optimum conditionné par les composants passifs indépendamment des semi-conducteurs.
- L'utilisation de ponts de commutation complets (en 'H') associé à la commutation douce de type ZVS permet un grand mutisme des perturbations de mode commun (ponts complets) et rayonnées (la commutation ZVS limite les fronts de tension (dV/dt) et de courant (di/dt) lors de commutations.

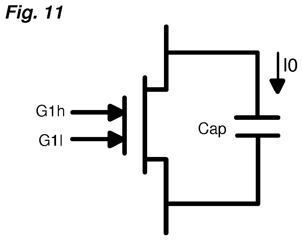

Par ailleurs, il est également possible d'obtenir les avantages suivants :
- Le transformateur, du fait de l'impédance du circuit résonant de type LC, est alimenté par un courant quasi-sinusoïdal dont le faible taux d'harmoniques minimise les pertes fer dans le noyau magnétique et les pertes joules par effet de peau dans les bobinages.
- Le bobinage primaire du transformateur implique nécessairement la présence d'une inductance magnétisante (non représentée sur les figures 7 et 8) qui assure une amplification, grâce au circuit LLC ainsi formé, de la tension du réseau sur le primaire du transformateur sur un spectre de fréquence donné et à faible charge électrique. Cette propriété permet de prélever du courant même lorsque la tension de la batterie à charger est supérieure à celle du réseau dans la limite de l'amplification permise par le circuit LLC.
- Le blocage du transistor peut être réalisé en détournant le courant à couper dans une capacité parallèle (Cap) entre chaque drain, comme représenté sur la figure 11. Cette capacité peut être la seule capacité de sortie du transistor comme un composant réel ajouté (l'amorçage se faisant à tension nulle, cette augmentation de capacité ne causera aucune perturbation). On aura ainsi une énergie au blocage extrêmement faible tout en contrôlant le front de tension à un niveau satisfaisant.
- Dans le cas où la tension d'entrée est trop faible pour absorber un courant sur le réseau, le pont de commutation au secondaire du transformateur applique une tension en opposition de phase de façon à assurer le contrôle du courant prélevé au réseau.
- Dans le cas où on souhaite décharger la batterie dans le réseau, le fonctionnement inverse est à appliquer. Le pont au secondaire du transformateur impose la tension au primaire du transformateur sur lequel est synchronisée la commande du pont de commutation au primaire avec un contrôle du courant injecté dans le réseau similaire à celui appliqué en charge : on pilote la variation de fréquence et la phase (en phase ou opposition) entre les deux ponts.

Les différents aspects du pilotage des grilles des transistors dans les bras de commutation présentent ainsi un certain nombre d'avantages qui ont été décrits ci-dessus, notamment :
- Eviter toute mise en court-circuit de la source de tension ;
- Proposer toujours un chemin pour reboucler le courant de charge, chose essentielle lorsque la charge est inductive ;
- Gérer l'inversion de polarité de la source de tension ;
- Permettre une utilisation dans un convertisseur ayant une topologie telle que celles décrites ci-dessus, en permettant notamment un fonctionnement en ZVS ;

Par ailleurs, il faut comprendre que les solutions de pilotage proposées ci-dessus pourront bien entendu s'adresser à des réalisations qui diffèrent entre elles par le nombre de transistors par bras de commutation, par le nombre de bras de commutation, quelle que soit la charge électrique connectée en aval.

## Revendications

1. Convertisseur à double pont qui comporte :
- Un transformateur (3) comprenant un enroulement primaire et un enroulement secondaire ;
- Un premier pont de commutation (20) de type AC/AC connecté à l'enroulement primaire du transformateur et qui comporte au moins deux bras de commutation connectés à une source de tension alternative d'entrée (Ve), chaque bras de commutation comportant au moins deux transistors ;
- Un deuxième pont de commutation (21) de type AC/DC connecté à l'enroulement secondaire du transformateur (3) et qui comporte au moins deux bras de commutation ;
- Un circuit résonant connecté au premier pont de commutation et à l'enroulement primaire du transformateur et qui comporte un condensateur de résonance (Cr) en série avec une inductance (Lr) ;
- Un système de commande des transistors du premier pont de commutation et du deuxième pont de commutation ;
- **Caractérisé en ce que** chaque bras de commutation du premier pont de commutation comporte au moins un premier transistor (TH1, TH2) bidirectionnel à deux électrodes de grille et un deuxième transistor (TL1, TL2) bidirectionnel à deux électrodes de grille connectés en série, chaque électrode de grille de chaque transistor pouvant être dans un premier état ou dans un deuxième état, chaque transistor étant commandé de sorte que lorsque :
∘ Sa première électrode de grille (G1h, G2h) est dans le premier état et sa deuxième électrode de grille (G1l, G2l) dans le premier état, le transistor est à l'état ouvert,
∘ La première électrode de grille (G1 h, G2h) et la deuxième électrode de grille (G1l, G2l) sont dans des états différents, le transistor est dans un mode de fonctionnement diode, le mode de fonctionnement diode étant diode inverse ou diode direct selon l'état de chaque électrode de grille,
∘ Sa première électrode de grille (G1 h, G2h) est dans le deuxième état et sa deuxième électrode de grille (G1l, G2l) est dans le deuxième état, le transistor est à l'état fermé.

2. Convertisseur selon la revendication 1, **caractérisé en ce que** le système de commande comporte :
- des moyens de traitement agencés pour exécuter des instructions pour appliquer au moins une séquence de commande déterminée au premier pont de commutation ;
- des moyens d'acquisition de données utilisées comme entrées pour appliquer ladite séquence de commande ;
- des moyens de commande recevant des commandes de la part des moyens de traitement et agencés pour appliquer des signaux de commande sur les grilles des transistors desdits au moins deux bras de commutation selon la séquence de commande qui est appliquée ;
**Caractérisé en ce que** ledit système est apte à commander une séquence de commande de type pleine onde audit premier pont de commutation, dans laquelle le premier transistor du premier bras de commutation et le deuxième transistor du deuxième bras de commutation sont à l'état fermé en même temps et le deuxième transistor du premier bras de commutation et le premier transistor du premier bras de commutation sont à l'état fermé en même temps.

3. Convertisseur selon la revendication 2, **caractérisé en ce que** ladite séquence de commande de type pleine onde est mise en oeuvre sur chaque bras de commutation du premier pont de commutation de la manière suivante :
- Lorsque le premier transistor (TH1, TH2) est commuté de l'état fermé vers un mode de fonctionnement diode, le mode de fonctionnement diode est choisi pour assurer une mise en conduction naturelle du deuxième transistor (TL1, TL2) selon un mode de fonctionnement diode de type roue libre ;
- Lorsque le premier transistor (TH1, TH2) est commuté dans le mode de fonctionnement diode, le deuxième transistor (TL1, TL2) est dans un mode de fonctionnement diode choisi pour reboucler un courant de charge (I0) et assurer la continuité dudit courant de charge (I0) ;
- Lorsque le deuxième transistor (TL1, TL2) est commuté du mode de fonctionnement diode vers l'état fermé, le premier transistor (TH1, TH2) est maintenu dans son mode de fonctionnement diode.

4. Convertisseur selon la revendication 3, **caractérisé en ce que**, lorsque la tension d'entrée est dans une alternance de tension positive, le premier transistor (TH1, TH2) étant initialement à l'état fermé et le deuxième transistor (TL1, TL2) initialement dans le mode de fonctionnement diode, ledit système est apte à mettre en oeuvre la séquence suivante :
- Commander le premier transistor dans le mode de fonctionnement diode,
- Après un temps-mort, commander le deuxième transistor à l'état fermé,
- Commander le deuxième transistor dans le mode de fonctionnement diode,
- Après un temps-mort, commander le premier transistor à l'état fermé,

5. Convertisseur selon la revendication 3 ou 4, **caractérisé en ce que**, lorsque la tension d'entrée est dans une alternance de tension négative, le premier transistor (TH1) étant initialement à l'état fermé et le deuxième transistor (TL1) initialement dans le mode de fonctionnement diode, ledit système est apte à mettre en oeuvre la séquence suivante :
- Commander le premier transistor dans le mode de fonctionnement diode,
- Après un temps-mort, commander le deuxième transistor à l'état fermé,
- Commander le deuxième transistor dans le mode de fonctionnement diode,
- Après un temps-mort, commander le premier transistor à l'état fermé.

6. Convertisseur selon l'une des revendications 2 à 5, **caractérisé en ce que** ladite séquence de commande comporte une étape de commutation des deux électrodes de grilles de tous les transistors dans le premier état lorsque la tension d'entrée est proche de zéro, entre une alternance de tension positive et une alternance de tension négative et entre une alternance de tension négative et une alternance de tension positive.

7. Convertisseur selon l'une des revendications 1 à 6, **caractérisé en ce qu'**il comporte des moyens de mesure de la tension fournie par ladite source d'alimentation.

8. Procédé de commande de chaque bras de commutation d'un convertisseur tel que défini dans l'une des revendications 1 à 7, ledit bras de commutation comportant au moins un premier transistor (TH1) bidirectionnel à deux électrodes de grille et un deuxième transistor (TL1) bidirectionnel à deux électrodes de grille connectés en série à une source d'alimentation fournissant une tension (Ve) d'entrée alternative comprenant au moins une alternance de tension positive suivie d'une alternance de tension négative et commandés pour fournir une tension de sortie à une charge électrique (C) destinée à être traversée par un courant de charge (Ic) et connectée en parallèle du deuxième transistor, ledit premier transistor (TH1) comprenant une première électrode de grille (G1 h), une deuxième électrode de grille (G1l), et le deuxième transistor comprenant une première électrode de grille (G2h), une deuxième électrode de grille (G2l), chaque électrode de grille de chaque transistor pouvant être dans un premier état ou dans un deuxième état, chaque transistor étant commandé de sorte que lorsque :
- Sa première électrode de grille (G1 h, G2h) est dans le premier état et sa deuxième électrode de grille (G1l, G2l) dans le premier état, le transistor est à l'état ouvert,
- La première électrode de grille (G1 h, G2h) et la deuxième électrode de grille (G1l, G2l) sont dans des états différents, le transistor est dans un mode de fonctionnement diode, le mode de fonctionnement diode étant diode inverse ou diode direct selon l'état de chaque électrode de grille,
- Sa première électrode de grille (G1 h, G2h) est dans le deuxième état et sa deuxième électrode de grille (G1l, G2l) est dans le deuxième état, le transistor est à l'état fermé,
- **Caractérisé en ce que**, pendant chaque alternance de tension positive ou négative, ledit procédé suit la séquence suivante :
o Lorsque le premier transistor (TH1) est commuté de l'état fermé vers un mode de fonctionnement diode, le mode de fonctionnement diode est choisi pour assurer une mise en conduction naturelle du deuxième transistor (TL1) selon un mode de fonctionnement diode de type roue libre ;
∘ Lorsque le premier transistor (TH1) est commuté dans le mode de fonctionnement diode, le deuxième transistor (TL1) est dans un mode de fonctionnement diode choisi pour reboucler le courant de charge et assurer la continuité du courant de charge (Ic) en roue libre ;
∘ Lorsque le deuxième transistor (TL1) est commuté du mode de fonctionnement diode vers l'état fermé, le premier transistor (TH1) est maintenu dans son mode de fonctionnement diode.

9. Procédé selon la revendication 8, **caractérisé en ce que**, lorsque l'alternance de tension est positive, le premier transistor (TH1) étant initialement à l'état fermé et le deuxième transistor (TL1) initialement dans le mode de fonctionnement diode, il consiste à suivre la séquence suivante :
∘ Commander le premier transistor dans le mode de fonctionnement diode,
∘ Après un temps-mort, commander le deuxième transistor à l'état fermé,
∘ Commander le deuxième transistor dans le mode de fonctionnement diode,
∘ Après un temps-mort, commander le premier transistor à l'état fermé.

10. Procédé selon la revendication 8 ou 9, **caractérisé en ce que**, lorsque l'alternance de tension est négative, le premier transistor (TH1) étant initialement à l'état fermé et le deuxième transistor (TL1) initialement dans le mode de fonctionnement diode, il consiste à suivre la séquence suivante :
∘ Commander le premier transistor dans le mode de fonctionnement diode,
∘ Après un temps-mort, commander le deuxième transistor à l'état fermé,
∘ Commander le deuxième transistor dans le mode de fonctionnement diode,
∘ Après un temps-mort, commander le premier transistor à l'état fermé.

11. Procédé selon l'une des revendications 8 à 10, **caractérisé en ce qu'**il comporte une étape de détection de l'alternance de la tension d'entrée (Ve) fournie par ladite source d'alimentation.

12. Chargeur de batteries d'un véhicule électrique, **caractérisé en ce qu'**il comporte un convertisseur tel que défini dans l'une des revendications 1 à 7.
